# EUROPEAN PATENT APPLICATION

(11) **EP 4 826 525 A1**
(43) Date of publication of application: **21.10.2026**
(21) Application number: 25846459.3
(22) Date of filing: 09.04.2025
(51) Int. Cl.: G06F 8/65

(54) **ONLINE UPDATE METHOD AND APPARATUS FOR VEHICLE INTELLIGENT CONTROLLER, VEHICLE AND STORAGE MEDIUM**

(30) Priority: 01.08.2024 CN 202411050502
(71) Applicant: Chery Automobile Co., Ltd., Wuhu, Anhui 241006 (CN)
(72) Inventor: GUO, Tonggang, Wuhu, Anhui 241006 (CN); ZHANG, Qiang, Wuhu, Anhui 241006 (CN); WANG, Mingzan, Wuhu, Anhui 241006 (CN); YE, Yingqin, Wuhu, Anhui 241006 (CN); CHEN, Long, Wuhu, Anhui 241006 (CN)
(74) Representative: Adamson Jones
(86) International application number: PCT/CN2025/088137
(87) International publication number: WO 2026/026011

(57) **Abstract**

An online update method and apparatus for a vehicle intelligent controller, a vehicle and a storage medium, relating to the technical field of vehicle update. The method comprises: when a software update request for an intelligent controller is received, parsing the software update request to obtain a current vehicle configuration management requirement; on the basis of the current vehicle configuration management requirement, determining vehicle configuration information to be updated; on the basis of said vehicle configuration information, sending an update instruction and an update software package to the intelligent controller to be updated; and updating software of said intelligent controller on the basis of the update instruction and the update software package. The method realizes automatic update of intelligent controllers, which not only improves the update efficiency, but also reduces the management cost required for intelligent controller update.

## Description

The present disclosure claims priority to Chinese Patent Application No. 202411050502.5, filed August 1, 2024, and entitled "ONLINE UPDATE METHOD AND DEVICE FOR VEHICLE INTELLIGENT CONTROLLER, VEHICLE, AND STORAGE MEDIUM", the entire contents of which are incorporated herein by reference.

### TECHNICAL FIELD

The present disclosure relates to the technical field of vehicle upgrading, and particularly to an online update method and apparatus for a vehicle intelligent controller, as well as a vehicle and a storage medium.

### BACKGROUND

With the rapid development of the smart cockpit (hereinafter referred to as the intelligent controller), the differentiated requirements of customers and various original equipment manufacturers (OEMs) for cockpit systems, as well as the increasingly growing cost pressure, OEMs and tier one automotive suppliers (TIER1) have adopted different "three-modularization" (platform, module, standard) strategies to reduce costs. Given the rapid advancement of information technology, the version iteration speed of intelligent controllers is relatively fast, thereby necessitating online updates for the intelligent controller.

Considering the large data volume of the cockpit system, it is impossible to implement the upgrade and update of the intelligent controller by means of the small-data-volume online flashing solution. Therefore, in the related art, intelligent controllers are generally distinguished by a large number of part numbers, and the upgrade methods of the intelligent controller include universal serial bus (USB) upgrade and over-the-air (OTA) upgrade.

However, the USB upgrade and OTA upgrade in the related art require manual intervention, resulting in low update efficiency of the intelligent controller.

### SUMMARY

The present disclosure provides an online update method and apparatus for a vehicle intelligent controller, a vehicle, and a storage medium, which not only improves the update efficiency but also reduces the management cost associated with updating the intelligent controller.

To achieve the above objective, the first aspect of the present disclosure proposes an online update method for a vehicle intelligent controller, and the method includes the following steps:
in response to receiving a software update request for an intelligent controller, parsing the software update request to obtain a current vehicle configuration management requirement;
determining vehicle configuration information to be updated according to the current vehicle configuration management requirement;
sending an update instruction and an update software package to an intelligent controller to be updated according to the vehicle configuration information to be updated; and
updating software of the intelligent controller to be updated based on the update instruction and the update software package.

According to an embodiment of the present disclosure, before sending the update instruction and the update software package to the intelligent controller to be updated according to the vehicle configuration information to be updated, the method further includes:
obtaining multiple groups of vehicle configuration information and multiple groups of intelligent controller information;
acquiring a preset mapping table by maintaining and matching the multiple groups of vehicle configuration information and the multiple groups of intelligent controller information; and
searching for the intelligent controller to be updated from the preset mapping table according to the vehicle configuration information to be updated.

According to an embodiment of the present disclosure, after searching for the intelligent controller to be updated from the preset mapping table, the method further includes:
obtaining a name and a key of a Wi-Fi hotspot preset at a production site;
searching for and connecting to the Wi-Fi hotspot based on the name and the key;
controlling the intelligent controller to be updated to establish a connection with a production management backend and send an authentication request; and
enabling communication between the intelligent controller to be updated and the production management backend in response to the authentication request being approved.

According to an embodiment of the present disclosure, after updating the software of the intelligent controller to be updated, the method further includes:
obtaining an inspection result by performing an electrical check on an updated vehicle; and
uploading the inspection result and current updated software version information to the production management backend.

According to an embodiment of the present disclosure, the multiple groups of vehicle configuration information include at least one of a vehicle identification number (VIN) or a current configuration, and the multiple groups of intelligent controller information include at least one of a supplier name, a hardware part number, a device serial number, or current software and hardware version information.

According to the online update method for the vehicle intelligent controller proposed in embodiments of the present disclosure, when the software update request is received, the software update request is parsed to obtain current vehicle configuration management requirement, so as to determine vehicle configuration information to be updated according to the current vehicle configuration management requirement; an update instruction is sent and an update software package is pushed to the intelligent controller to be updated according to the vehicle configuration information to be updated, and the software of the intelligent controller to be updated is updated based on the update instruction and the update software package. Thus, the present disclosure realizes automatic update of the vehicle intelligent controller. Compared with the upgrade mode requiring manual intervention in the related art, the present disclosure not only improves the update efficiency of the intelligent controller, but also reduces the management cost required for updating the intelligent controller.

To achieve the above objective, the second aspect of the present disclosure proposes an online update apparatus for a vehicle intelligent controller, and the apparatus includes:
a processing module, configured to, in response to receiving a software update request for an intelligent controller, parse the software update request to obtain a current vehicle configuration management requirement; determine vehicle configuration information to be updated according to the current vehicle configuration management requirement; and determine vehicle configuration information to be updated according to the current vehicle configuration management requirement; and
an update module, configured to send an update instruction and an update software package to an intelligent controller to be updated according to the vehicle configuration information to be updated, and update software of the intelligent controller to be updated based on the update instruction and the update software package.

According to an embodiment of the present disclosure, before sending the update instruction and the update software package to the intelligent controller to be updated according to the vehicle configuration information to be updated, the update module further includes:
an acquisition unit, configured to obtain multiple groups of vehicle configuration information and multiple groups of intelligent controller information, and acquire a preset mapping table by maintaining and matching the multiple groups of vehicle configuration information and the multiple groups of intelligent controller information; and
a search unit, configured to search for the intelligent controller to be updated from the preset mapping table according to the vehicle configuration information to be updated.

According to an embodiment of the present disclosure, after searching for the intelligent controller to be updated from the preset mapping table, the search unit is further configured to:
obtain a name and a key of a Wi-Fi hotspot preset at a production site;
search for and connect to the Wi-Fi hotspot based on the name and the key;
control the intelligent controller to be updated to establish a connection with a production management backend and send an authentication request; and
enable communication between the intelligent controller to be updated and the production management backend in response to the authentication request being approved.

According to an embodiment of the present disclosure, after updating the software of the intelligent controller to be updated, the updating module is further configured to:
obtain an inspection result by performing an electrical check on an updated vehicle; and
upload the inspection result and current updated software version information to the production management backend.

According to an embodiment of the present disclosure, the multiple groups of vehicle configuration information include at least one of a vehicle VIN or a current configuration, and the multiple groups of intelligent controller information include at least one of a supplier name, a hardware part number, a device serial number, or current software and hardware version information.

According to the online update apparatus for the vehicle intelligent controller proposed in embodiments of the present disclosure, when the software update request is received, the software update request is parsed to obtain current vehicle configuration management requirement, so as to determine vehicle configuration information to be updated according to the current vehicle configuration management requirement; an update instruction is sent and an update software package is pushed to the intelligent controller to be updated according to the vehicle configuration information to be updated, and the software of the intelligent controller to be updated is updated based on the update instruction and the update software package. Thus, the present disclosure realizes automatic update of the vehicle intelligent controller. Compared with the upgrade mode requiring manual intervention in the related art, the present disclosure not only improves the update efficiency of the intelligent controller, but also reduces the management cost required for updating the intelligent controller.

To achieve the above objective, the third aspect of the present disclosure proposes a vehicle. The vehicle includes a memory, a processor, and a computer program stored on the memory and executable on the processor. The processor executes the program to perform the online update method of the vehicle intelligent controller as described in the above embodiments.

To achieve the above objective, the fourth aspect of the present disclosure proposes a computer-readable storage medium on which a computer program is stored. The program is executed by a processor to perform the online update method of the vehicle intelligent controller as described in the above embodiments.

Additional aspects and advantages of the present disclosure will be set forth in part in the description which follows, and in part will be obvious from the description, or may be learned by practice of the present disclosure.

### BRIEF DESCRIPTION OF DRAWINGS

The above and/or additional aspects and advantages of the present disclosure will become apparent and easily understandable from the following description of embodiments in conjunction with the accompanying drawings.
FIG. 1 is a flowchart of an online update method for a vehicle intelligent controller according to some embodiments of the present disclosure;
FIG. 2 is a schematic structural diagram of an online update system for a vehicle intelligent controller according to some embodiments of the present disclosure;
FIG. 3 is a flowchart of another online update method for a vehicle intelligent controller according to some embodiments of the present disclosure;
FIG. 4 is a block schematic diagram of an online update apparatus for a vehicle intelligent controller according to some embodiments of the present disclosure; and
FIG. 5 is a schematic structural diagram of a vehicle according to some embodiments of the present disclosure.

### DETAILED DESCRIPTION

Embodiments of the present disclosure are described in detail below, examples of which are illustrated in the accompanying drawings, wherein identical or similar reference numerals refer to identical or similar elements or elements having identical or similar functions throughout. The embodiments described below with reference to the accompanying drawings are exemplary, intended to explain the present disclosure and shall not be construed as limitations to the present disclosure.

The online update method and apparatus for a vehicle intelligent controller, vehicle, and storage medium according to embodiments of the present disclosure are described below with reference to the accompanying drawings.

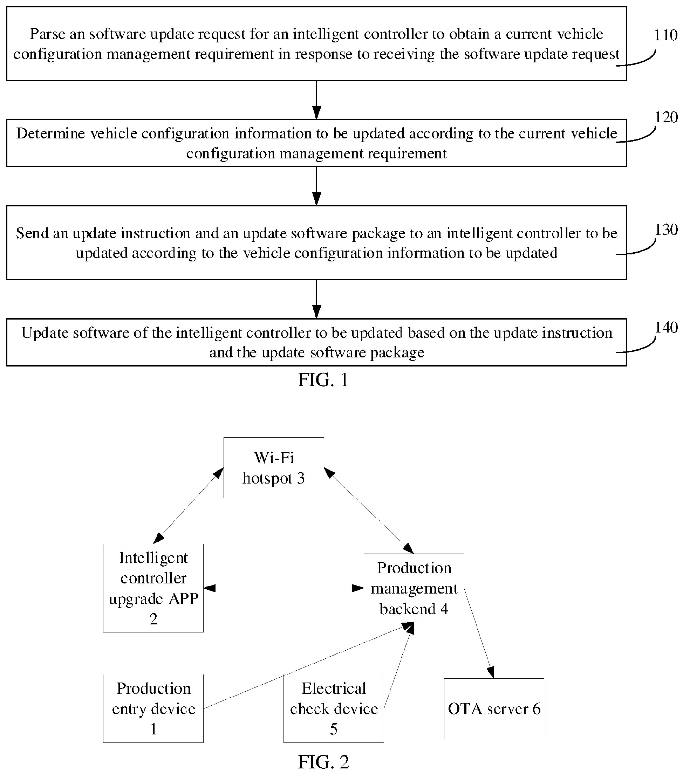

FIG. 1 is a flowchart of an online update method for a vehicle intelligent controller according to some embodiments of the present disclosure.

Before introducing the online update method for a vehicle intelligent controller proposed in embodiments of the present disclosure, the related technical background and the online update system for a vehicle intelligent controller involved in the online update method for a vehicle intelligent controller are first described.

With the rise of intelligent connected vehicles, intelligent controllers of smart cockpits of different levels have been widely applied in vehicles, becoming a key competitive advantage of domestic automakers in both domestic and international markets. For this reason, the differentiated functions and the size of intelligent software of intelligent controllers have become increasingly uncontrollable. Compared with conventional vehicle controllers and their software, the software of intelligent controllers is extremely large in size. Meanwhile, to shorten the development cycle and reduce development costs as much as possible, automakers have invested heavily in platform-based design of hardware and software. At present, major domestic automakers and suppliers have realized platform-based design and production of hardware and common-version design of software. However, due to the oversized software of intelligent controllers and excessively long upgrade time, online flashing on the production line cannot be performed like traditional controllers, so a large number of part numbers have to be used to distinguish intelligent controllers, resulting in the following problems.
(1) Increased management costs caused by a large number of part numbers for both automakers and suppliers.
(2) Significantly reduced production efficiency of suppliers, as production lines have to be adjusted for part number switching, requiring additional production line tooling and testing equipment.
(3) Difficulties in after-sales maintenance and change management, which may bring new after-sales quality risks due to management issues.
(4) High rework costs of parts, with stagnant rework caused by differences in functions and software.
(5) Reduced overall vehicle production efficiency, as platform-based design makes parts indistinguishable in appearance and cannot be identified by conventional error-proofing means.

Based on the above problems, embodiments of the present disclosure propose an online update method for a vehicle intelligent controller. By combining OTA differential technology with the production system, point-to-point rapid flashing and updating can be realized, separating software from hardware or vehicle models. This allows the production system to operate without being constrained by part numbers, saving significant costs and time in production stocking, state switching management, and software management.

As shown in FIG. 2, the online update system for the vehicle intelligent controller includes a production entry device 1, an intelligent controller upgrade APP 2, a Wi-Fi hotspot 3, a production management backend 4, an electrical check device 5, and an OTA server 6. The production entry device 1 is a two-dimensional code and barcode scanning device, which can scan, identify, and upload information such as the supplier, hardware part number, software and hardware version, and device serial number on the label of the intelligent controller, as well as the vehicle VIN on the assembly list to the production management backend 4. The intelligent controller upgrade APP 2 is used to prestore the name and key of the Wi-Fi hotspot 3 on the production site, and can automatically connect to the Wi-Fi hotspot with one click, establish a connection with the production management backend 4, and simultaneously execute upgrade tasks issued by the production management backend 4 and receive the issued upgrade software packages as a client. The Wi-Fi hotspot 3 serves as a router to connect the intelligent controller upgrade APP 2 and the production management backend 4. The production management backend 4 is used to maintain the overall vehicle configuration information, overall vehicle production information and overall vehicle bill of materials (BOM) information, match and bind the information uploaded by the intelligent controller upgrade APP 2 with the prestored information, and issue corresponding upgrade instructions and upgrade software packages after correct binding. The electrical check device 5 is a production configuration management device, which can perform software refreshing, diagnosis, and verification of part numbers and software/hardware version information of all controllers for the overall vehicle according to the overall vehicle configuration information, and upload the software and hardware version information of the intelligent controller to the production management backend 4. The OTA server 6 is an after-sales OTA upgrade management platform for managing and executing OTA upgrade tasks.

A server is developed on the production management backend 4 to manage and match vehicle information, intelligent controller information and software version information, and deploy intelligent controller upgrade tasks according to production plan requirements. An upgrade APP, namely the intelligent controller upgrade APP 2, is developed on the intelligent controller side to realize wireless network connection and server login authentication, and manage software upgrade tasks and display screen control functions. A full-function software is developed based on the full hardware platform, and all subsequent mass-produced software iterations are differential iterative upgrades based on the first set of full-function software. Thus, suppliers only need to continuously produce basic version software, and all software for new requirements is updated by online flashing in the form of software part numbers, without managing associated contents such as hardware status and production status. The production line scans the two-dimensional code of the intelligent controller label and the VIN of the overall vehicle to be assembled together into the production management backend 4 through a two-dimensional code scanning tool on the production assembly line. The production management backend 4 establishes a binding correspondence between hardware part numbers, software part numbers, and overall vehicle VINs, and pushes upgrade services and manages software and hardware versions for the intelligent controllers of vehicles under production through the upgrade management service in combination with production tasks and engineering configuration information. Meanwhile, the data can be uploaded to the OTA server in real time to synchronously realize OTA push management after the overall vehicle is launched.

Thus, embodiments of the present disclosure combine the current mainstream OTA differential upgrade solution, hardware platform-based design and software/hardware common-version design, transform the current production management system backend and the software upgrade mode of the intelligent controller, and newly develop a special APP for online flashing on the production line to manage and control the entire upgrade process, so as to realize the online software update function of the automaker's production line in combination with the current production rhythm and mode.

In embodiments of the present disclosure, the execution subject of each step is a computer device. The computer device is the above-mentioned production management backend 4, such as a terminal device where the production management backend 4 is located, a server providing backend services for the production management backend 4, or other electronic devices for performing data calculation and data processing. Exemplarily, the computer device is a device where a vehicle mentioned in the following embodiments is located, or a device where other smart home appliances are located.

Exemplarily, as shown in FIG. 1, the online update method for a vehicle intelligent controller includes at least one of the following steps 110 to 140.

In step 110, in response to receiving a software update request for the intelligent controller, the software update request is parsed to obtain a current vehicle configuration management requirement.

The software update request is a request for updating the software of the intelligent controller. The intelligent controller mentioned in embodiments of the present disclosure includes at least one of the following: a controller for power, a controller for chassis, a controller for automatic driving or assisted driving, a controller for vehicle body, and a controller for network.

In some embodiments, if the software update request for the intelligent controller is received, it is determined that the software of the intelligent controller needs to be updated. Exemplarily, the software update request is parsed to obtain the current vehicle configuration management requirement.

In other embodiments, if no software update request for the intelligent controller is received, it is determined that the software of the intelligent controller is not updated.

In some embodiments, the software update request is sent periodically or triggered by a user.

The current vehicle configuration management requirement refers to requirements for vehicle configuration management, that is, requirements on how to implement vehicle management.

In some embodiments, step S101 (not shown in the figure) is further included before step 110. Exemplarily, in step S101, it is determined whether the software update request for the intelligent controller is received.

That is to say, the system or server continuously monitor whether there is a software update request from the intelligent controller, and the intelligent controller sends an update request to the server based on a preset update strategy (such as regular check, user trigger, etc.).

In step 120, vehicle configuration information to be updated is determined according to the current vehicle configuration management requirement.

In some embodiments, the above method further includes step S102 (not shown in the figure). In step S102, when the software update request is received, the software update request is parsed to obtain the current vehicle configuration management requirement, and vehicle configuration information to be updated is determined according to the current vehicle configuration management requirement.

Specifically, after receiving the software update request, the system parses the software update request to obtain key information contained therein, especially requirements on vehicle configuration management (which may include the software version to be updated, update content upgrade, etc.). According to the current vehicle configuration management requirement as parsed, it is further determined which group of vehicle configuration information (there are multiple vehicles on the production line, each corresponding to a group of vehicle configuration information) needs to be updated. Exemplarily, according to the current vehicle configuration management requirement as parsed, it is further determined which vehicles need to be updated.

In step 130, an update instruction and an update software package are sent to the intelligent controller to be updated according to the vehicle configuration information to be updated.

In some embodiments, the above method further includes step S103 (not shown in the figure). In step S103, the update instruction is sent, and the update software package is pushed to the intelligent controller to be updated according to the vehicle configuration information to be updated, and the software of the intelligent controller to be updated is updated based on the update instruction and the update software package.

In some embodiments, the update software package is a new software version file for updating the software of the intelligent controller. Exemplarily, the update instruction is an instruction for updating the intelligent controller. The vehicle configuration information includes at least one of a vehicle VIN or current configuration information.

In step 140, the software of the intelligent controller to be updated is updated based on the update instruction and the update software package.

That is to say, the system sends the update instruction according to the vehicle configuration information to be updated and pushes a corresponding update software package to the intelligent controller to be updated. The update instruction usually contains specific commands and parameters required to execute the update, and the update software package contains the new software version file. The intelligent controller to be updated executes the software update operation based on the received update instruction and update software package.

According to the technical solution provided by embodiments of the present disclosure, when the software update request is received, the software update request is parsed to obtain current vehicle configuration management requirement, so as to determine vehicle configuration information to be updated according to the current vehicle configuration management requirement; an update instruction is sent and an update software package is pushed to the intelligent controller to be updated according to the vehicle configuration information to be updated, and the software of the intelligent controller to be updated is updated based on the update instruction and the update software package. Thus, the present disclosure realizes the automatic update of the vehicle intelligent controller. Compared with the upgrade mode requiring manual intervention in the related art, the present disclosure not only improves the update efficiency of the intelligent controller, but also reduces the management cost required for updating the intelligent controller.

In some embodiments, multiple groups of vehicle configuration information and multiple groups of intelligent controller information are obtained; the multiple groups of vehicle configuration information and multiple groups of intelligent controller information are maintained and matched to acquire a preset mapping table; and the intelligent controller to be updated is found from the preset mapping table according to the vehicle configuration information to be updated.

Further, in some embodiments, before sending the update instruction and pushing the update software package to the intelligent controller to be updated according to the vehicle configuration information to be updated, the method further includes: obtaining multiple groups of vehicle configuration information and multiple groups of intelligent controller information, maintaining and matching the multiple groups of vehicle configuration information and multiple groups of intelligent controller information to acquire a preset mapping table, and searching the intelligent controller to be updated from the preset mapping table according to the vehicle configuration information to be updated.

In some embodiments, the multiple groups of vehicle configuration information include a vehicle VIN and current configuration, and the multiple groups of intelligent controller information include supplier name, hardware part number, device serial number, and current software and hardware version information.

Specifically, before sending the update instruction, the system needs to maintain a mapping table (i.e., the preset mapping table) in advance. The preset mapping table is generated by binding the vehicle VIN with corresponding intelligent controller information by the production management backend when the intelligent controller is assembled to the vehicle on the production line. The table associates multiple groups of vehicle configuration information (such as the vehicle VIN and current configuration) with multiple groups of intelligent controller information (such as supplier name, hardware part number, device serial number, and current software and hardware version information). Through the preset mapping table, the system quickly finds the corresponding intelligent controller as the controller to be updated according to the vehicle configuration information to be updated.

It should be noted that there is a strong dependency between the software and hardware of the controller. Since the hardware is completely consistent, all software can be upgraded through the basic version, and the software part number cannot reflect the software differential package information, resulting in the inability to prevent errors during software updates. Therefore, the differential package information needs to be independently maintained in the production management backend according to the differences in software functions and version information.

With the technical solution provided by embodiments of the present disclosure, multiple groups of vehicle configuration information and multiple groups of intelligent controller information are maintained and matched to acquire the preset mapping table; and the intelligent controller to be updated is found from the preset mapping table according to the vehicle configuration information to be updated. This helps to improve the efficiency and accuracy of determining the intelligent controller to be updated.

Further, in some embodiments, after finding the intelligent controller to be updated from the preset mapping table, the method further includes: obtaining the name and key of a Wi-Fi hotspot preset on the production site; automatically searching for and connecting to the Wi-Fi hotspot based on the name and key, so that the intelligent controller to be updated establishes a connection with the production management backend and sends an authentication request; and enabling the communication between the intelligent controller to be updated and the production management backend when the authentication request is approved.

In some embodiments, the name and key of a Wi-Fi hotspot preset on the production site are obtained; the Wi-Fi hotspot is searched for and connected based on the name and key; the intelligent controller to be updated is controlled to establish a connection with the production management backend and send an authentication request; and the communication between the intelligent controller to be updated and the production management backend is enabled when the authentication request is approved, or the communication between the intelligent controller to be updated and the production management backend is not enabled when the authentication request is not approved.

Specifically, to ensure the smooth progress of the update process, the system uses the Wi-Fi hotspot preset on the production site to establish a connection between the intelligent controller to be updated and the production management backend. By obtaining the name and key of the Wi-Fi hotspot and automatically searching for and connecting to it, the system sends an authentication request to verify the identity and permission after the successful connection. Only after passing the authentication can the intelligent controller obtain the communication with the production management backend for subsequent update operations.

With the technical solution provided by embodiments of the present disclosure, the Wi-Fi hotspot is used to control the intelligent controller to be updated to establish a connection with the production management backend. Further, whether to enable the communication between the intelligent controller to be updated and the production management backend is determined based on whether the authentication request is approved. This method can not only realize the automatic connection between the intelligent controller to be updated and the production management backend, but also ensure that the intelligent controller obtains the communication in compliance with the requirements, and the software update of the intelligent controller is compliant.

Further, in some embodiments, after updating the software of the intelligent controller to be updated, the method further includes: obtaining an inspection result by performing an electrical check on the vehicle that has completed the update; and uploading the inspection result and the current updated software version information to the production management backend.

Specifically, after the software update is completed, to ensure the stability and safety of the vehicle system, an electrical check needs to be performed on the vehicle. The obtained electrical check result is crucial for evaluating the update effect. Uploading the inspection result and the current updated software version information to the production management backend helps background managers monitor and evaluate the update effect, and provides a basis for subsequent optimization and improvement.

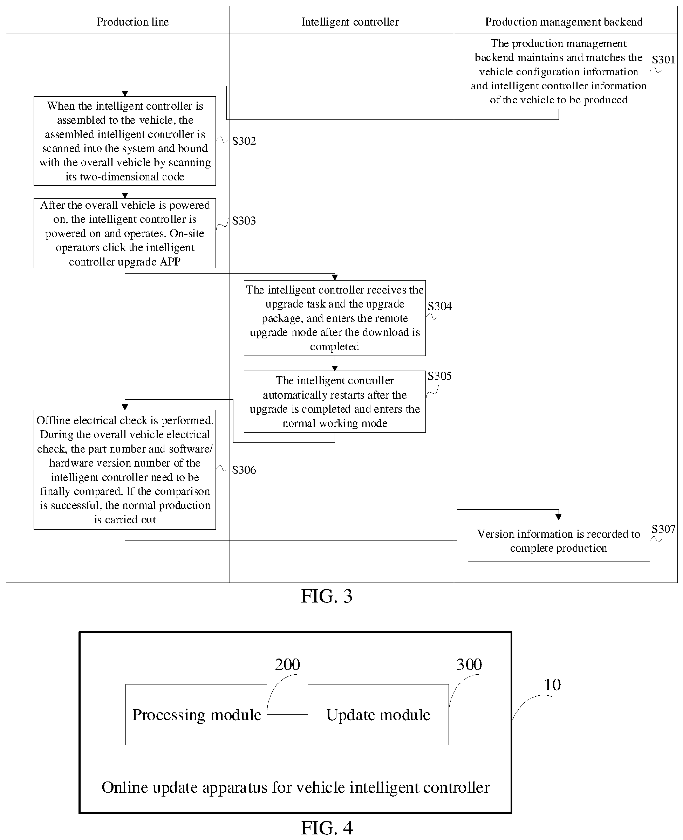

To facilitate those skilled in the art to further understand the online update method for a vehicle intelligent controller proposed in embodiments of the present disclosure, further elaboration is made below with reference to FIG. 3.

As shown in FIG. 3, the online update method for the vehicle intelligent controller further includes the following steps 301 to 307.

In step 301, the production management backend maintains and matches the vehicle configuration information and intelligent controller information (including part number, software and hardware version information, supplier information, upgrade package information, etc.) of the vehicle to be produced.

In step 302, when the intelligent controller is assembled to the vehicle, the assembled intelligent controller is scanned into the system and bound with the overall vehicle by scanning its two-dimensional code.

It should be noted that the two-dimensional code of the intelligent controller needs to reflect the supplier code, hardware part number information, and software version information. After scanning, the intelligent controller information is input into the production management backend and bound with the VIN of the vehicle being assembled in the production management backend. The backend system binds the software version to be updated by matching the information in the VIN field, so that query and matching can be performed when the intelligent controller applies for upgrade.

In step 303, after the overall vehicle is powered on, the intelligent controller is powered on and operates. On-site operators click the intelligent controller upgrade APP, and the APP automatically executes all subsequent work.

It should be noted that the intelligent controller upgrade APP needs to prestore the backend connection key. The intelligent controller APP is connected to the production system backend. After the successful connection, the two-dimensional code information of the intelligent controller is uploaded to the backend. The backend matches the associated software version through the information and actively pushes the corresponding software version to the intelligent controller for software version upgrade.

In step 304, the intelligent controller receives the upgrade task and the upgrade package, and enters the remote upgrade mode after the download is completed.

At this time, the display screen is turned off to save power.

In step 305, the intelligent controller automatically restarts after the upgrade is completed and enters the normal working mode.

It should be noted that if the upgrade is unsuccessful, the upgrade will be performed again; if the upgrade fails continuously, the system will roll back to the initial state and wait for manual processing.

In step 306, offline electrical check is performed. During the overall vehicle electrical check, the part number and software/hardware version number of the intelligent controller need to be finally compared. If the comparison is successful, the normal production is carried out.

It should be noted that if the comparison fails, rework processing is required, and U-disk update is performed manually.

In step 307, version information is recorded to complete production.

According to the online update method for the vehicle intelligent controller proposed in embodiments of the present disclosure, when the software update request is received, the software update request is parsed to obtain current vehicle configuration management requirement, so as to determine vehicle configuration information to be updated according to the current vehicle configuration management requirement; according to the preset mapping table, an update instruction is sent and an update software package is pushed to the intelligent controller to be updated according to the vehicle configuration information to be updated, and the software of the intelligent controller to be updated is updated based on the update instruction and the update software package. Thus, the problem that large-scale intelligent controllers cannot be updated online in the prior art due to the need for manual intervention and the strict requirements and planning for production tempo in the current overall vehicle assembly line operation is solved, and the production efficiency is improved while the management cost is reduced.

Next, the online update apparatus for the vehicle intelligent controller proposed according to embodiments of the present disclosure is described with reference to the accompanying drawings.

FIG. 4 is a block schematic diagram of an online update apparatus for a vehicle intelligent controller according to some embodiments of the present disclosure.

As shown in FIG. 4, the online update apparatus 10 for the vehicle intelligent controller includes a processing module 200 and an update module 300.

In some embodiments, the apparatus further includes a judgment module (not shown in the figure) for judging whether the software update request for the intelligent controller is received.

The processing module 200 is configured to parse a software update request for an intelligent controller to obtain the current vehicle configuration management requirement in response to receiving the software update request; and determine vehicle configuration information to be updated according to the current vehicle configuration management requirement.

The update module 300 is configured to send an update instruction and an update software package to the intelligent controller to be updated according to the vehicle configuration information to be updated; and update the software of the intelligent controller to be updated based on the update instruction and the update software package.

Further, in some embodiments, before sending the update instruction and the update software package to the intelligent controller to be updated according to the vehicle configuration information to be updated, the update module 300 further includes an acquisition unit and a search unit.

The acquisition unit (not shown in the figure) is configured to obtain multiple groups of vehicle configuration information and multiple groups of intelligent controller information, and maintain and match the multiple groups of vehicle configuration information and the multiple groups of intelligent controller information to acquire a preset mapping table.

The search unit (not shown in the figure) is configured to find the intelligent controller to be updated from the preset mapping table according to the vehicle configuration information to be updated.

Further, in some embodiments, after finding the intelligent controller to be updated from the preset mapping table, the search unit is further configured to:
obtain the name and key of a Wi-Fi hotspot preset on the production site;
search for and connect to the Wi-Fi hotspot based on the name and key;
control the intelligent controller to be updated to establish a connection with the production management backend and send an authentication request; and
enable the communication between the intelligent controller to be updated and the production management backend when the authentication request is approved.

Further, in some embodiments, after updating the software of the intelligent controller to be updated, the update module 300 is further configured to:
obtain an inspection result by performing an electrical check on an updated vehicle; and
upload the inspection result and the current updated software version information to the production management backend.

Further, in some embodiments, the multiple groups of vehicle configuration information include at least one of the following: a vehicle VIN and current configuration, and the multiple groups of intelligent controller information include at least one of the following: supplier name, hardware part number, device serial number, and current software and hardware version information.

It should be noted that the foregoing explanation of the embodiments of the online update method for the vehicle intelligent controller is also applicable to the online update apparatus for the vehicle intelligent controller of the embodiments, and will not be repeated here.

According to the online update apparatus for the vehicle intelligent controller proposed in embodiments of the present disclosure, when the software update request is received, the software update request is parsed to obtain current vehicle configuration management requirement, so as to determine vehicle configuration information to be updated according to the current vehicle configuration management requirement; an update instruction is sent and an update software package is pushed to the intelligent controller to be updated according to the vehicle configuration information to be updated, and the software of the intelligent controller to be updated is updated based on the update instruction and the update software package. Thus, the present disclosure realizes the automatic update of the vehicle intelligent controller. Compared with the upgrade mode requiring manual intervention in the related art, the present disclosure not only improves the update efficiency of the intelligent controller, but also reduces the management cost required for updating the intelligent controller.

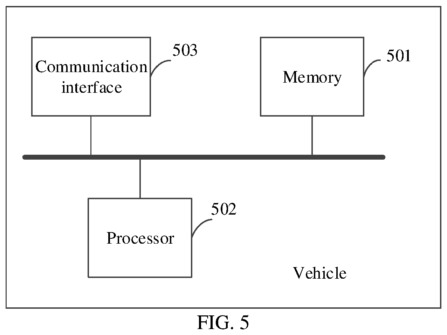

FIG. 5 is a schematic structural diagram of a vehicle according to some embodiments of the present disclosure, which can also be regarded as a schematic structural diagram of the above-mentioned computer device. The vehicle includes:
a memory 501, a processor 502, and a computer program stored in the memory 501 and executable on the processor 502.

The processor 502 implements the online update method for the vehicle intelligent controller provided in the above embodiments when executing the computer program.

Further, the vehicle also includes a communication interface 503.

The communication interface 503 is used for communication between the memory 501 and the processor 502.

The memory 501 is used for storing computer programs operable on the processor 502.

The memory 501 includes a high-speed random access memory (RAM) memory, and also includes a non-transitory memory, such as at least one disk memory.

In the case that the memory 501, the processor 502, and the communication interface 503 are implemented independently, the communication interface 503, the memory 501 and the processor 502 are connected to each other through a bus to complete mutual communication. The bus is an industry standard architecture (ISA) bus, a peripheral component interconnect (PCI) bus, an extended industry standard architecture (EISA) bus, or the like. The bus is divided into an address bus, a data bus, a control bus, etc. For ease of representation, only one thick line is used in FIG. 5, but it does not mean that there is only one bus or one type of bus.

Optionally, in specific implementation, if the memory 501, the processor 502 and the communication interface 503 are integrated on one chip, the memory 501, the processor 502, and the communication interface 503 complete mutual communication through internal interfaces.

The processor 502 is a central processing unit (CPU), or an application-specific integrated circuit (ASIC), or one or more integrated circuits configured to implement embodiments of the present disclosure.

Some embodiments of the present disclosure further provide a computer-readable storage medium, on which a computer program is stored, and the program is executed by a processor to implement the above online update method for the vehicle intelligent controller.

In addition, the terms "first" and "second" are used for descriptive purposes only and cannot be understood as indicating or implying relative importance or implicitly indicating the number of indicated technical features. Thus, a feature defined with "first" and "second" may explicitly or implicitly include at least one of the features. In the description of the present disclosure, "a plurality of" means at least two, such as two, three, etc., unless otherwise specifically and clearly defined.

In the description of this specification, descriptions with reference to the terms "one embodiment", "some embodiments", "example", "specific example", or "some examples" mean that specific features, structures, materials or characteristics described in connection with the embodiment or example are included in at least one embodiment or example of the present disclosure. In this specification, the schematic representations of the above terms do not necessarily refer to the same embodiment or example. Furthermore, the specific features, structures, materials or characteristics described may be combined in any one or more embodiments or examples in a suitable manner. In addition, those skilled in the art can combine and combine the different embodiments or examples described in this specification and the features of the different embodiments or examples without conflicting with each other.

Although the embodiments of the present disclosure have been shown and described above, it can be understood that the above embodiments are exemplary and cannot be construed as limitations to the present disclosure, and those skilled in the art can make changes, modifications, substitutions and variations to the above embodiments within the scope of the present disclosure.

## Claims

1. An online update method for a vehicle intelligent controller, the method being executed by a computer device, and comprising:
in response to receiving a software update request for an intelligent controller, parsing the software update request to obtain a current vehicle configuration management requirement;
determining vehicle configuration information to be updated according to the current vehicle configuration management requirement;
sending an update instruction and an update software package to an intelligent controller to be updated according to the vehicle configuration information to be updated; and
updating software of the intelligent controller to be updated based on the update instruction and the update software package.

2. The method according to claim 1, wherein before sending the update instruction and the update software package to the intelligent controller to be updated according to the vehicle configuration information to be updated, the method further comprises:
obtaining a plurality of groups of vehicle configuration information and a plurality of groups of intelligent controller information;
acquiring a preset mapping table by maintaining and matching the plurality of groups of vehicle configuration information and the plurality of groups of intelligent controller information; and
searching for the intelligent controller to be updated from the preset mapping table according to the vehicle configuration information to be updated.

3. The method according to claim 2, wherein after searching for the intelligent controller to be updated from the preset mapping table, the method further comprises:
obtaining a name and a key of a Wi-Fi hotspot preset at a production site;
searching for and connecting to the Wi-Fi hotspot based on the name and the key;
controlling the intelligent controller to be updated to establish a connection with a production management backend and send an authentication request; and
enabling communication between the intelligent controller to be updated and the production management backend in response to the authentication request being approved.

4. The method according to claim 2 or 3, wherein the plurality of groups of vehicle configuration information comprise at least one of a vehicle VIN or a current configuration, and the plurality of groups of intelligent controller information comprise at least one of a supplier name, a hardware part number, a device serial number, or current software and hardware version information.

5. The method according to any one of claims 1 to 4, wherein after updating the software of the intelligent controller to be updated, the method further comprises:
obtaining an inspection result by performing an electrical check on an updated vehicle; and
uploading the inspection result and current updated software version information to the production management backend.

6. An online update apparatus for a vehicle intelligent controller, comprising:
a processing module, configured to, in response to receiving a software update request for an intelligent controller, parse the software update request to obtain a current vehicle configuration management requirement; determine vehicle configuration information to be updated according to the current vehicle configuration management requirement; and determine vehicle configuration information to be updated according to the current vehicle configuration management requirement; and
an update module, configured to send an update instruction and an update software package to an intelligent controller to be updated according to the vehicle configuration information to be updated, and update software of the intelligent controller to be updated based on the update instruction and the update software package.

7. The apparatus according to claim 6, wherein before sending the update instruction and the update software package to the intelligent controller to be updated according to the vehicle configuration information to be updated, the update module further comprises:
an acquisition unit, configured to obtain a plurality of groups of vehicle configuration information and a plurality of groups of intelligent controller information, and acquire a preset mapping table by maintaining and matching the plurality of groups of vehicle configuration information and the plurality of groups of intelligent controller information; and
a search unit, configured to search for the intelligent controller to be updated from the preset mapping table according to the vehicle configuration information to be updated.

8. The apparatus according to claim 7, wherein after searching for the intelligent controller to be updated from the preset mapping table, the search unit is further configured to:
obtain a name and a key of a Wi-Fi hotspot preset at a production site;
search for and connect to the Wi-Fi hotspot based on the name and the key;
control the intelligent controller to be updated to establish a connection with a production management backend and send an authentication request; and
enable communication between the intelligent controller to be updated and the production management backend in response to the authentication request being approved.

9. A vehicle, comprising: a memory, a processor, and a computer program stored on the memory and executable on the processor, wherein the processor executes the program to perform the online update method for the vehicle intelligent controller as defined in any one of claims 1 to 5.

10. A computer-readable storage medium, having a computer program stored thereon, wherein the program is executed by a processor to perform the online update method for the vehicle intelligent controller as defined in any one of claims 1 to 5.
